# EUROPEAN PATENT SPECIFICATION

(11) **EP 3 034 184 B1**
(45) Date of publication and mention of the grant of the patent: **03.06.2020**
(21) Application number: 16154913.4
(22) Date of filing: 24.06.2010
(51) Int. Cl.: B07B 1/28, B07B 1/46, B07B 13/16, B07B 13/18, B01D 33/03, E21B 21/06

(54) **APPARATUS AND METHOD FOR SEPARATING SOLIDS FROM A SOLIDS LADEN DRILLING FLUID**
VORRICHTUNG UND VERFAHREN ZUR ABSCHEIDUNG VON FESTSTOFFEN AUS EINER MIT FESTSTOFFEN BELADENEN BOHRFLÜSSIGKEIT
APPAREIL ET PROCÉDÉ POUR SÉPARER DES SOLIDES D'UN LIQUIDE DE FORAGE CHARGÉ DE PARTICULES SOLIDES

(30) Priority: 24.06.2009 US 490492
(43) Date of publication of application: 22.06.2016
(62) Divisional of application: 10735320.3
(73) Proprietor: National Oilwell Varco, L.P., Houston, TX 77036 (US)
(72) Inventor: BURNETT, George, Alexander, Aberdeen, Aberdeenshire AB10 7JR (GB)
(74) Representative: Rankin, Douglas

(56) References cited:
- WO-A1-2004/110589
- WO-A2-2005/070565
- WO-A2-2005/107963
- WO-A2-2009/048783
- US-A- 6 155 428

## Description

The invention relates to an apparatus and method for separating solids from a solids laden drilling fluid. The disclosure further relates to a shale shaker and screen assemblies therefor.

In the drilling of a borehole in the construction of an oil or gas well, a drill bit is arranged on the end of a drill string, which is rotated to bore the borehole through a formation. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The density of the drilling mud is closely controlled to inhibit the borehole from collapse and to ensure that drilling is carried out optimally. The density of the drilling mud affects the rate of penetration of the drill bit. By adjusting the density of the drilling mud, the rate of penetration changes at the possible detriment of collapsing the borehole. The drilling mud may also carry lost circulation materials for sealing porous sections of the borehole. The acidity of the drilling mud may also be adjusted according to the type of formation strata being drilled through. The drilling mud contains *inter alia* expensive synthetic oil-based lubricants and it is normal therefore to recover and re-use the used drilling mud, but this requires *inter alia* the solids to be removed from the drilling mud. This is achieved by processing the drilling mud. The first part of the process is to separate the solids from the solids laden drilling mud. This is at least partly achieved with a vibratory separator, such as those shale shakers disclosed in US 5,265,730, WO 96/33792 and WO 98/16328. Further processing equipment such as centrifuges and hydrocyclones may be used to further clean the mud of solids. The solids are covered in contaminates and residues. It is not uncommon to have 30 to 100m³ of drilling fluid in circulation in a borehole.

The resultant solids, known herein as "drill cuttings" are processed to remove substantially all of the residues and contaminates from the solids. The solids can then be disposed of in a landfill site or by dumping at sea in the environment from which the solids came. Alternatively, the solids may be used as a material in the construction industry or have other industrial uses.

Shale shakers generally comprise an open bottomed basket having one open discharge end and a solid walled feed end. A number of rectangular screens are arranged over the open bottom of the basket. The screens may be substantially planar or have a slight crown. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces separation of the drilling mud from the solids, the drilling mud passing through the screens and the solids above the screens. The shaking motion also induces the solids to move along the screens towards the open discharge end. The recovered drilling mud is received in the receptor for further processing and the solids pass over the discharge end of the basket into the ditch or skip.

The rectangular screens may be arranged at an angle to horizontal, such as a seven degrees incline from the feed end to the discharge end of the shale shaker. The angle may be adjustable. The screens are generally fixed in the basket and the basket is adjustable to adjust the angle of the screens relative to horizontal. The flow of solids laden drilling fluid may form a pool on the inclined screens. The action of the vibratory mechanism induces solids to climb the inclined screens to the discharge end of the shaker and into the ditch or skip.

Generally, a vibratory mechanism inducing a circular vibration will tend to throw solids from the screen into the air in random directions. A vibratory mechanism inducing an elliptical motion will induce the solids to move in a direction of the longest chord of the ellipse. A shale shaker having a vibratory mechanism inducing a very thin ellipse is known as a linear shale shaker and induces fast movement of solids along the screen, although the screen tends to suffer fast degradation due to sudden deceleration of the solids as they meet the screen.

The screens are generally of one of two types: hook-strip; and pre-tensioned.

The hook-strip type of screen comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. The supporting mesh may be provided with or replaced by a panel having apertures therein.

The pre-tensioned type of screen comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen is then inserted into C-channel rails arranged in a basket of a shale shaker. An example of this type of screen is disclosed in GB-A-1,578,948 and an example of a shale shaker suitable for receiving the pre-tensioned type screens is disclosed in GB-A-2,176,424.

A problem associated with shale shakers is that screens used therein tend to blind, especially when the solids are gummy, such as clay, or of a size close to the size of the mesh size of the screen. The latter type of blinding is known as near-sized particle blinding. A number of solutions have been proposed to tackle this problem, such as disclosed in GB-A-1,526,663 in which a screen assembly using two layers of screening material in a sandwich and allowing the layers of screening material to move independently to dislodge any near sized particles lodged in one of the screens.

It is advantageous to use fine-meshed screens to filter very small particles, for example of a size in the range of 50-200µ or more, without the filtering device clogging up with the small particles. However, it is the fine-meshed filters in particular that are prone to such undesired clogging.

It is also advantageous to have a simple reliable separator to inhibit down-time for maintenance and repair.

It is preferable in certain circumstances to retain particles, for example of a particle size in the range of 50-60 µ or larger, by means of a screen.

US-A-4,446,022 and US-A-4,306,974 disclose a shale shaker for separating solids from solids laden drilling mud having a header tank for holding solids laden drilling mud, the header tank having a weir over which the solids laden drilling mud flows on to a first screen, solids passing over a front end of the first screen and drilling mud flowing through the first screen on to a tray and diverted into a sump. Excess drilling mud flows over a weir located at the rear of the first screen on to a second screen. Solids pass over a front end of the second screen and drilling mud flows through the second screen on to a tray and diverted into the sump. Excess drilling mud flows over a weir located at the rear of the second screen on to a third screen. Solids pass over a front end of the third screen and drilling mud flows through the third screen directly falling into the sump.

WO 2009/048783 discloses an apparatus and a method for separating solids from solids laden drilling fluid in accordance with the preambles of claim 1 and 10. WO 2009/048783 further discloses a shale shaker having a top, middle and bottom screening decks with inclined flow tray arranged between top and middle screening decks and a further inclined flow tray arranged between the middle and bottom screening decks. Each deck is divided into two side by side screens divided by a central wall. A flow distribution box is arranged at a feed end of the shaker, which has two duct openings per side. Solids laden drilling fluid is fed on to top screening deck, and "scalped" solids laden drilling fluid passes therethrough and on to inclined flow tray which directs the scalped fluid over dividers into the ducts. Ducts A and C direct scalped solids laden drilling fluid to the middle screening deck and ducts B and D direct scalped solids laden drilling fluid to the bottom deck. Scalped solids laden drilling fluid screened by the middle screening deck falls on to further inclined flow tray and is directed through further ducts in the flow distribution box. Scalped solids laden drilling fluid screened by the bottom screening deck falls diretly into a sump.

WO 2004/110589 and the Axiom AX-1 shale shaker brochure disclose discloses two embodiments of a shale shaker. The first embodiment has a top, inclined middle and inclined bottom screen with inclined flow tray arranged between top and middle screens and a further inclined flow tray arranged between the middle and bottom screens. A distributor is arranged at a feed end of the inclined flow tray. Solids laden drilling fluid is fed on to top screen, and "scalped" solids laden drilling fluid passes therethrough on to the inclined flow tray and into ducts. In a first configuration, duct directs the "scalped" solids laden drilling fluid on to the middle screen and duct directs "scalped" solids laden drilling fluid on to bottom screen. Screened solids laden drilling fluid passes through the middle screen on to further inclined flow tray, through ducts into a sump, and from inclined bottom screen directly into the sump. In a second configuration, flap valves are moved to change the flow through the distributor to direct "scalped" solids laden drilling fluid from the inclined flow tray to the middle screen, whereupon screened solids laden drilling fluid falls on to flow tray to the distributor and on to a feed end of the bottom screen to further screen the screened solids laden drilling fluid. The further screened fluid falls directly in the sump. The second embodiment has a top, inclined middle and inclined bottom screen with inclined flow tray arranged between top and middle screens and a further inclined flow tray arranged between the middle and bottom screens. In a first configuration, a weir is arranged at a feed end of the inclined middle screen. Solids laden drilling fluid is fed on to top screen, and "scalped" solids laden drilling fluid passes therethrough on to flow tray and on to a plate at the foot of inclined middle screen to be screened thereby. Screened solids laden drilling fluid flows therethrough and on to further inclined flow tray, through duct and opening into a sump. Any surplus "scalped" solids laden drilling fluid passes over weir, through ducts and on to a feed end of inclined bottom screen. In a second configuration, a plate is placed above weir and a plate is placed over opening. "Scalped" solids laden drilling fluid from the inclined flow tray flows on to the middle screen, whereupon screened solids laden drilling fluid falls on to flow tray to the distributor and on to a feed end of the bottom screen to further screen the screened solids laden drilling fluid. The further screened fluid falls directly in the sump.

US-A-6,155,428 discloses a shale shaker having a generally horizontal upper screen and an inclined lower screen with a deflector plate or intermediate screen.

US 2010/0089802 discloses a shale shaker for separating solids from solids laden drilling fluid having lost circulation material (LCM) entrained therein. The shale shaker comprises four screen decks in a stack. The top most screen deck comprises a scalping screen to remove large solids. The second screen deck comprises medium mesh for removing LCM and medium size solids, which pass over the second deck and sent for further treatment or storage. The underflow proceeds on to a third screen deck having fine mesh and a weir. Overflow from the weir falls on to a fourth screen deck having fine mesh screen. The underflow from the third screen deck passes through a chute in a sump and the underflow from the fourth screen deck falls directly into the sump. The chutes, diverters and channels are interchangeable, in one aspect, so that series or parallel flow to and from one or more selected decks is facilitated.

In the drilling of an oil or gas well, cracks may exist in the wall of the wellbore. Such cracks may propagate, which could cause structural problems in the wall of the wellbore and/or allow drilling fluids to escape therethorough into the formation. Furthermore, if substantial amounts of drilling fluids are lost, the pressure in the drilling fluid in the wellbore may drop, which could cause collapse of the wellbore. Accordingly, Wellbore Strengthening Materials may be added to circulated drilling fluid. The Wellbore Strengthening Materials comprise sized particles of drill cuttings. When the drilling fluid is circulated around the wellbore wall with cracks therein, the sized particles wedge themselves in the cracks, which reduces the likelihood of the cracks propagating. It is beneficial to recover these sized particles and reuse them in circulated drilling mud. Shale shakers have thus been modified to size solids in solids laden drilling fluid. Such a shale shaker is disclosed in USSN 12/490,492, published as US-A1-2010/0089652. A range of sizes of solids can be extracted using such a shale shaker and re-circulated as Wellbore Strengthening Material in fresh drilling fluid. It is desirable to retain some small particles such as barites that are often found in drilling muds, and thus the fine screens are preferably not too fine as to screen the barites from the drilling mud.

In the past it has been common to use multiple screens at multiple levels in a shale shaker to process drilling fluid, e.g., screens at one, two or three levels. "Lost circulation" of drilling fluid occurs when, in drilling a wellbore, the circulation of drilling fluid to and then away from the drill bit ceases due to the porosity of the formation and/or due to fracturing of the formation through which the wellbore is being drilled. When lost circulation occurs, drilling fluid is pumped into the fractured formation rather than being returned to the surface. Often circulation is lost at some specific depth where the formation is "weak", and that the fracture extends horizontally away from the borehole. Expressions used to describe rocks that are susceptible to lost returns include terms like vugular limestone, unconsolidated sand, "rotten" shale, and the like.

A wide variety of "lost circulation materials" ("LCM") have been pumped into wellbores to fill or seal off a porous formation or to fill or seal off a wellbore fracture so that a proper route for drilling fluid circulation is re-established. Often lost circulation materials are generally divided into fibres, flakes, granules, and mixtures. Often it is also desirable to recover and retain the lost circulation material in the drilling mud system during continuous circulation. Screening the drilling mud for removal of undesired particulate matter can also result in removal of the lost circulation material and, therefore, require continuous introduction of new lost circulation material to the drilling mud downstream of the mud screening operation. The addition of lost circulation material compounds the separating problems because it, like the drilling fluid, is preferably cleaned and re-circulated. Exiting the well is the drilling fluid of small size, the lost circulation material of a large size, and the undesirable material of a size there-between, with the largest and smallest of the materials, and/or materials larger than the lost circulation material, to be re-circulated.

A conventional two step screening process as shown in U.S. Pat. No. 4,116,288 is known. There the exiting mixture of drilling fluid, lost circulation material and undesirable material is first subjected to a coarse screening to separate the lost circulation material from the drilling fluid and undesirable material which drops to a second finer screen there-below to separate the drilling fluid from the undesirable material. The drilling fluid and lost circulation material are then reunited for recirculation into the well. This system is susceptible to height restrictions and fine screen problems. The lost circulation material can be coated with undesirable material which will not go through a first screen, moves over and exits off of the top side of the first screen, and is circulated back into a well.

There are a variety of known drilling fluid processing systems, shale shakers, and methods for recovery of lost circulation material; including, for example, but not limited to, those in U.S. Patents 6,868,972; 6,669,027; 6,662,952; 6,352,159; 6,510,947; 5,861,362; 5,392,925; 5,229,018; 4,696,353; 4,459,207; 4,495,065; 4,446,022; 4,306,974; 4,319,991; and 4,116,288

In certain prior systems, problems have been encountered with systems for screening out lost circulation material when undesirable material of the same size is also screened out.

In accordance with the present invention, there is provided, according to claim 1, an apparatus for separating solids from solids laden drilling fluid and sizing the solids, the apparatus comprising a basket, a vibratory mechanism, a first screen deck and a second screen deck mounted below said first screen deck and a directing device for selecting a parallel or series mode of operation, wherein in a parallel mode of operation flow of solids laden drilling fluid is divided between the first deck and the second deck, and wherein in a series mode of operation solids laden drilling fluid is directed on to the first screen deck and then drilling fluid screened thereby is directed on to said second screen deck, wherein the apparatus further comprises a moveable diverter tray for selecting parallel or series mode of operation, wherein said moveable diverter tray is slideably arranged in rails having an expandable element to selectively fix said moveable diverter tray in said rails, wherein said diverter tray comprises a handle accessible at a discharge end of said basket. In series mode, the solids walked off the first screen deck can be collected and reused, such as with lost circulation material which can be added back to the screened drilling fluid in the sump or mud pit.

Preferably, the rails comprise a track or C-channels.

The diverter tray, when closed, acts as the flow tray, but when open, allows solids laden drilling fluid to flow therethrough.

Preferably, the first screen deck is arranged at an uphill angle from a feed end to a discharge end of the basket, the first screen deck comprising a weir, such that upon a pond forming on the first screen deck and reaching a predetermined depth, solids laden drilling fluid may discharge over the weir. Advantageously, the apparatus further comprises a channel to direct flow of solids laden drilling fluid from the weir to the second screen deck. Preferably, the channel is arranged within the basket. Advantageously, the weir is provided with a ledge to inhibit solids passing thereover. The type of solids which may be prevented from passing thereover, are solids denser than the drilling mud, but may also help prevent other solids from passing thereover.

Advantageously, the apparatus further comprises a scalping screen deck. Preferably, the scalping screen deck comprises screening material for screening out large solids. Preferably, the apparatus further comprises a flow tray for directing scalped solids laden drilling fluid on to a feed end of the first screen deck.

Preferably, the diverter tray has a duct therebelow for directing screened solids laden drilling fluid on to the second screen deck, such that when the diverter tray is retracted, screened solids laden drilling fluid flows through the duct on to the second screen deck.

Advantageously, the diverter tray has a duct therebelow for directing screened solids laden drilling fluid into a sump, such that when the diverter tray is retracted, screened solids laden drilling fluid flows through the duct into the sump.

Also disclosed is an apparatus for separating solids from solids laden drilling fluid and sizing the solids, the apparatus comprising a basket, a vibratory mechanism, a first screen deck and a second screen deck mounted below the first screen deck and a directing device for selecting a parallel or series mode of operation in which flow of solids laden drilling fluid is divided between the first deck and the second deck and a series mode of operation in which solids laden drilling fluid is directed on to the first screen deck and then drilling fluid screened thereby is directed on to the second screen deck wherein the apparatus further comprises a moveable plate or duct for selecting parallel or series mode of operation.

Preferably, the plate is solid, imperforate and blind. Advantageously, the plate has at least one aperture therein. The plates may be switched from solid to aperture to select between series and parallel modes: solid for series and aperture for parallel or solid for parallel and aperture for series.

Preferably, the duct comprises a plate with an aperture therein. The plate may form the end of the duct.

Preferably, the first and second screen decks comprise screens having the same screen mesh size.

Advantageously, the first and second screen decks comprise screens having the different screen mesh size. Preferably, for running in series mode. Advantageously, the screen mesh size in the screens on the second screen deck is of a smaller size than the screen mesh size in the screens on the first screen deck.

Preferably, the basket is mounted on resilient means, such as springs or rubber bushings. Advantageously, the resilient means are mounted on a base. Preferably, a sump is arranged below the basket. Advantageously, a flow tray is arranged beneath the second screen deck to direct screened drilling fluid into the sump.

The present invention also provides, according to claim 10, a method for separating solids from solids laden drilling fluid and selectively sizing the solids, the apparatus comprising a basket, a vibratory mechanism, a first screen deck and a second screen deck mounted below said first screen deck and a directing device for selecting a parallel or series mode of operation, wherein in a parallel mode of operation flow of solids laden drilling fluid is divided between the first deck and the second deck, and wherein in a series mode of operation solids laden drilling fluid is directed on to the first screen deck and then drilling fluid screened thereby is directed on to said second screen deck wherein a flow tray is arranged between said first screen deck and said second screen deck, wherein the flow tray comprises a moveable diverter tray, the method further comprising the step of sliding said diverter tray arranged in rails having an expandable element therein to selectively fix said diverter tray in said rails in at least one of a first position for parallel mode of operation and a second position for series mode of operation, wherein the diverter tray comprises a handle accessible from an end opening of the basket, the method comprising the step of pulling on the handle to move the diverter tray.

In certain particular aspects, such methods and systems employs a novel shale shaker in accordance with the present invention with screening apparatus including multiple screens and conversion apparatus for changing a first separation mode from material flowing from one screen to another in series to a second separation made in which fluid flows to multiple screens in parallel.

A vibratory separator or shale shaker, in one embodiment has a screen or screens at separate levels as described herein in accordance with the present invention. In one particular aspect, two lowermost screens receive flow from a higher screen. Conversion apparatus permits this flow to be selectively changed from parallel to series, or vice-versa. The present invention, in certain embodiments, includes a vibratory separator or shale shaker with a base or frame; a "basket" or screen mounting apparatus on or in the base or frame; multiple screens at different, spaced apart distinct levels in accordance with the present invention; vibrating apparatus; mode conversion apparatus; and a collection tank or receptacle. Such a shale shaker can treat drilling fluid with solids therein, e.g. cuttings, debris, etc.; and drilling fluid with lost circulation material therein.

Also disclosed is a conversion apparatus for a system for processing a mixture of drilling fluid and solid material to separate at least one component of the mixture from the mixture, the system including a vibratable basket for receiving an input flow of drilling fluid with solids therein, a plurality of spaced apart screen assemblies including a first screen assembly and a second screen assembly positioned below the first screen assembly, the screen assemblies mounted in the vibratable basket and vibratable therewith, drilling fluid flowable through the first screen assembly and the second screen assembly down therefrom, the conversion apparatus associated with the screen assemblies for selectively controlling the input flow to select one of series flow and parallel flow, the conversion apparatus including: a body, a first flow channel through the body for effecting system parallel flow to the screen assemblies, and a second flow channel through the body for effecting system series flow to the screen assemblies.

Also disclosed is an insert between screens is a movable gate structure between screens provides the mode conversion feature. In other aspects inserts adjacent screens, appropriate flow channelling, and appropriately located flow-back barriers provide this mode conversion feature.

Also disclosed is a method for treating a flow of drilling fluid with solids, the method including introducing the flow of drilling fluid with solids to a system for separating at least one component from the flow, the system as any herein in accordance with the present invention, the method further including selecting one of a system series flow to the screen assemblies or a system parallel flow to the screen assemblies using a conversion apparatus, flowing drilling fluid with solids to the screen assemblies, and screening the flow to each screening assembly.

Also disclosed are methods and systems for processing drilling fluid to recover components thereof and, in one particular aspect for separating lost circulation material (or lost circulation material along with solids of similar size) from used drilling fluid. In certain aspects, the separated lost circulation material is recovered and used.

In certain particular aspects, such methods and systems employs a novel shale shaker in accordance with the present invention with screening apparatus below an initial scalper screen apparatus for separating lost circulation material (and/or material of similar size) from used drilling fluid.

A vibratory separator or shale shaker, in one embodiment has a screen or screens at separate levels as described herein in. In one particular aspect, two lowermost screens can receive flow from a higher screen in parallel or in series. Also disclosed is a vibratory separator or shale shaker with a base or frame; a "basket" or screen mounting apparatus on or in the base or frame; screens at three or four different, spaced-apart distinct levels in accordance with the present invention; vibrating apparatus; and a collection tank or receptacle. Such a shale shaker can treat drilling fluid contaminated with solids, e.g. cuttings, debris, etc.; and drilling fluid with lost circulation material (and/or material of similar size) therein. Such a shale shaker, in certain aspects, provides a separate exit stream from a second screening level which is primarily lost circulation material (and/or material of similar size).

For a better understanding of the present invention, reference will now be made, by way of example, to the accompanying drawings, in which:
Figure 1 is a schematic view of a solids laden drilling mud processing system;
Figure 2A is a side cross-sectional view of a shale shaker in accordance with the present invention;
Figure 2B is a side cross-sectional view of the shale shaker shown in Figure 2A;
Figure 2C is a side cross-sectional view of a shale shaker in accordance with the present invention;
Figure 2D is a side cross-sectional view of the shale shaker shown in Figure 2C;
Figure 2E is a perspective view of a diverter of the present invention;
Figure 2F is a front view of the shale shaker shown in Figure 2A;
Figure 2G is a view in cross-section of the diverter shown in Figure 6E in the shale shaker shown in Figure 2A;
Figure 3A is a side cross-sectional view of a shale shaker in accordance with the present invention;
Figure 3B is a side cross-sectional view of a shale shaker in accordance with the present invention;
Figure 3C is a perspective view of a flow barrier used in a shale shaker in accordance with the present invention;
Figure 3D is a perspective view of a flow barrier used in a shale shaker in accordance with the present invention;
Figure 4A is a side cross-sectional view of a shale shaker in accordance with the present invention;
Figure 4B is a side cross-sectional view of a shale shaker in accordance with the present invention;
Figure 4C is a perspective view of an insert used in a shale shaker in accordance with the present invention;
Figure 4D is a perspective view of a channel apparatus used in a shale shaker in accordance with the present invention;
Figure 4E is a perspective view of an insert used in a shale shaker in accordance with the present invention;
Figure 5A is a side cross-sectional view of a shale shaker in accordance with the present invention;
Figure 5B is a side cross-sectional view of the shale shaker shown in Figure 5A;
Figure 5C is a side cross-sectional view of a shale shaker in accordance with the present invention;
Figure 5D is a side cross-sectional view of the shale shaker of Figure 5C;
Figure 5E is a perspective view of an insert of a shale shaker in accordance with the present invention;
Figure 5F is a top view of the insert shown in Figure 5E;
Figure 6A is a side cross-sectional view of a shale shaker in accordance with the present invention;
Figure 6B is a side cross-sectional view of a shale shaker in accordance with the present invention;
Figure 6C is a perspective view of an insert of a shale shaker in accordance with the present invention;
Figure 6D is a top view of the insert shown in Figure 6C;
Figure 6E is a perspective view of a channel apparatus of a shale shaker in accordance with the present invention;
Figure 6F is a perspective view of an insert of a shale shaker in accordance with the present invention;
Figure 6G is a perspective view of an insert of a shale shaker in accordance with the present invention;
Figure 7A is a side cross-sectional view of a shale shaker in accordance with the present invention with a diverter in an open position;
Figure 7B is a side cross-sectional view of the shale shaker shown in Figure 7A with the diverter in a closed position;
Figure 7C is a top view of an insert of a shale shaker in accordance with the present invention;
Figure 7D is a top view of an insert of a shale shaker in accordance with the present invention;
Figure 7E is a top view of an insert of a shale shaker in accordance with the present invention;
Figure 8A is a side cross-sectional view of a shale shaker in accordance with the present invention, showing certain ducts and flow paths;
Figure 8B is a side cross-sectional view of the shale shaker shown Figure 8A, showing certain other ducts and flow paths;
Figure 8C is a side cross-sectional view of a shale shaker in accordance with the present invention, showing certain ducts and flow paths;
Figure 8D is a side cross-sectional view of the shale shaker shown in Figure 8C, showing certain other ducts and flow paths;
Figure 8E is a perspective view of an insert of a shale shaker in accordance with the present invention;
Figure 8F is a top view of the insert shown in 8E.
Figure 9A is a side cross-sectional view of a shale shaker in accordance with the present invention showing certain ducts and flow paths; and
Figure 9B is a side cross-sectional view of the shale shaker shown in Figure 9A, showing certain other ducts and flow paths.
Figure 9C is a side cross-sectional view of a shale shaker in accordance with the present invention.
Figure 9D is a side cross-sectional view of the shale shaker of Figure 9C.
Figure 9E is a perspective view of an insert of a shale shaker in accordance with the present invention.

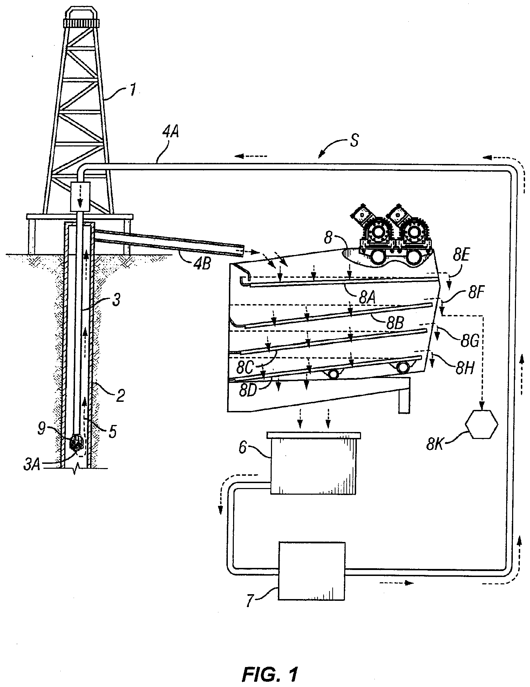

Figure 1 illustrates a system S which includes a derrick 1 that extends vertically over a wellbore 2. A tubular work string 3 extends into the wellbore 2, and extends from the earth's surface to a desired depth within the wellbore.

A flow line 4a is connected to the tubular work string 3. A flow line 4b is connected to annular space 5 formed between the outer surface of tubular work string 3 and the inner surface of wellbore 2. Drilling fluid (or "mud") for the system in a mud pit 6 is circulated through the overall mud system via a mud pump 7. During typical drilling operations, fluid is pumped into the tubular work string 3 by the mud pump 7 through the flow line 4a, circulated out a bottom end 3a of the tubular work string 3 (e.g., but not limited to, out from a drill bit 9), up an annulus 5 of the wellbore 2, and out of the annulus 5 via the flow line 4b.

Spent (or used) fluid mud exiting the wellbore annulus 5 through the flow line 4b includes drilling fluid, drill cuttings, lost circulation material (and/or material of similar size), and other debris encountered in the wellbore 2. Accordingly, the spent drill cuttings mixture leaving the well is directed to a separation device, such as one or more shale shakers 8 in accordance with the present invention. The combined mixture of drilling fluid, added material (e.g. solids and/or lost circulation material, etc.), debris, and drilled cuttings are directed to the shale shakers 8. Liquid drilling fluid passes through screens at the same or at different levels of the shaker, e.g. screens 8a, 8b, 8c, 8d which are at four different levels of the shale shakers 8 and is directed into the mud pit 6 (or the two lowermost screens are at the same level each receiving a portion of flow from the screen 8b). Drill cuttings and other solids pass over the screens 8a-8d of the shale shakers 8 and are discharged (arrows 8e, 8f, 8g, 8h). With the proper selection of screen mesh for the screen 8b, lost circulation material (with some material of similar size, if present) is separated by and discharged from the top of the screen 8b (see arrow 8f). The recovered lost circulation material (and/or material of similar size) flows and/or is pumped to a mud pit, a reservoir, or to a further processing apparatus 8k.

Optionally, the shale shakers 8 are like any other shale shaker disclosed herein in accordance with the present invention. One, two, or more screens in series may separate selected material (e.g., but not limited to, lost circulation material (LCM), such as wellbore strengthening materials (WSM)) that flows and/or is pumped to a reservoir or to the further processing apparatus 8k.

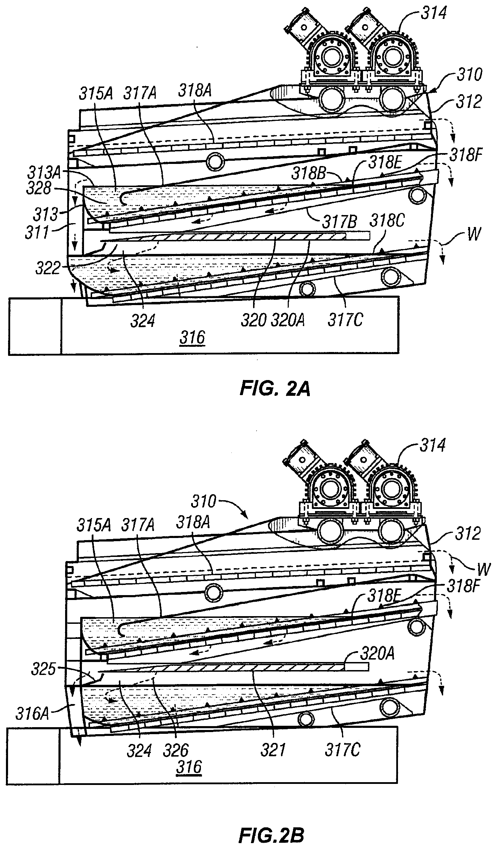

Figures 2A to 2D show a shale shaker 310 in accordance with a preferred embodiment of the present invention which has a basket 312 vibrated by vibratory apparatus 314 and a lower sump 316 which receives fluid (or fluid and some solids) that passes through three screens 318a, 318b, 318c which are mounted to the basket 312 at different levels.

Fluid flows through the screen 318a (which may be a scalping screen), flows down to a flow-back barrier 317a, through an opening 328, and then onto the screen 318b. As this fluid builds up into a pool 315a on the screen 318b, it rises to a level equal to and then greater than a top 313a of a weir 313.

Fluid then flows over the top 313a of the weir 313 through a channel 311 to the lower screen 318c. The opening 328 is defined by the weir 313 and an end of the flow-back barrier 317a. Fluid flows through the lower screen 318c on to a flow-back barrier 317c which directes the fluid into sump 316.

Fluid that flows through the screen 318b flows down a flow-back barrier 317b, over an end of a diverter 320, and down to the sump 316 via a channel 316a.

The diverter 320 is selectively movable in holding structure 320a and, as in Figure 2A, blocks an opening 322 of a channel 324 formed by spaced-apart members 325, 326.

As shown in Figure 2B, the diverter 320 prevents fluid that has exited from the bottom of the screen 318b from flowing onto the screen 318c. This fluid flows past the opening 322 into the channel 316a. Figures 2A and 2B illustrate a parallel fluid flow path.

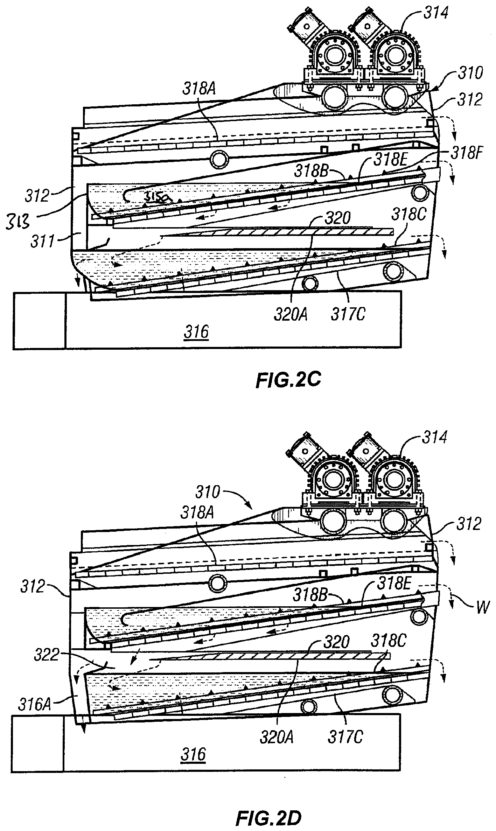

As shown in Figures 2C and 2D, the diverter 320 has been moved so that fluid is flowable down onto the screen 318c which has exited through the bottom of the screen 318b. This is an "in series" flow path - from the screen 318a to the screen 318b to the screen 318c - for fluid down to the sump 316. In series mode, the screen 318c is usually of a finer mesh than the mesh of screen 318b and screen 318a is usually a scalping screen. Thus the solids exiting the screen 318b will be graded, perhaps for reuse.

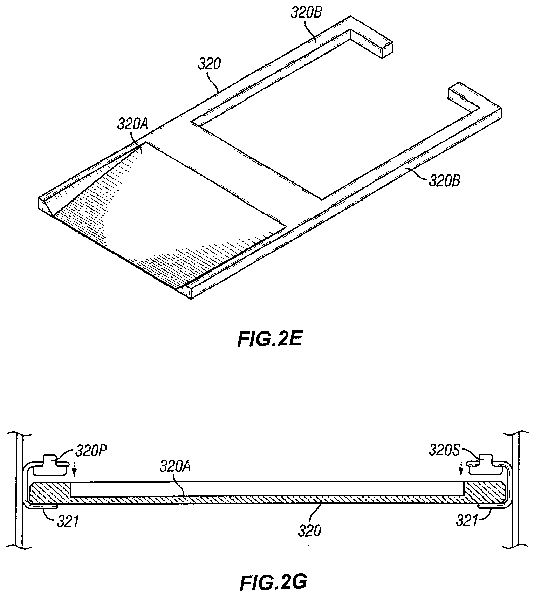

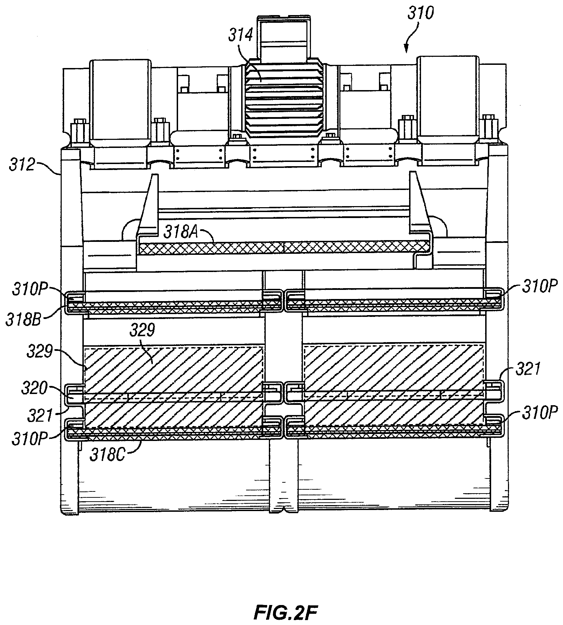

The diverter 320 can be manipulated and moved through an open end access area 329 (Figure 2F) of the basket 312. As shown in Figure 2E, the diverter 320 has a solid chute portion 320a for facilitating fluid flow and two handles 320b projecting from the chute portion 320a.

The angle from the horizontal of the screen 318b coupled with the height of the weir 313 determines the depth of the pool 315a and of a lower edge 318e of a beach area 318f on the screen 318b (e.g., see Figure 2C). Fluid flowing through the screen 318c flows down a flow-back barrier 317c into the sump 316. Solids (wet to some degree) flow off the ends of the screens as indicated by the arrows W.

The diverter 320 is mounted between rails 321 of the holding structure 320a (see, e.g. Figure 2G) and clamping apparatuses 320p, 320s are used to hold the diverter 320 in place. Any suitable clamping apparatus may be used including, without limitation, PNEUMOSEAL™ apparatuses, which comprise a pneumatic hose, which upon expansion holds the diverter 320 in C-shape rails. Clamping apparatuses 310p and 320s hold the screens in place.

Mesh in the screen 318A is preferably sized so that solids 3.175 mm (1/8") and 0.397 mm (1/64") are scalped. In one aspect, the screen 318A has a mesh size such that solids greater than 1.588 mm (1/16") are removed (and pieces of, among other things, solids and/or lost circulation material that are 1/16" or smaller in largest dimension pass through the screen 318A (e.g., but not limited to graphite ball lost circulation material that are 1.588 mm (1/16") in largest dimension or slightly smaller). The screen 318B has a mesh size as chosen for removing material of a certain largest dimension or larger, including, but not limited to solids, debris, drilled cuttings, desirable additives, and/or lost circulation material, such as wellbore strengthening material. In one aspect the mesh size is chosen in cooperation with the mesh size of the screen 318A so that the screen 318B removes lost circulation material (and solids or pieces of similar size) and, in one particular aspect the mesh size is chosen so that lost circulation material of a largest dimension of 1.588 mm (1/16") or greater does not pass through the screen 318B and flows from the top thereof. In one aspect such lost circulation material is graphite balls.

The exit stream from the screen 318B, in particular aspects, has wet lost circulation material (or wet lost circulation material along with solids of similar size) of at least 50% by volume; and in one particular aspect at least 75% lost circulation material by volume (in one example, the output is 50% lost circulation material and 50% solids of similar size). In certain aspects, screen mesh size is chosen so that a relatively large percentage of the flow off the top of the screen is lost circulation material, e.g. by volume, up to 50%, 75%, or up to 90%.

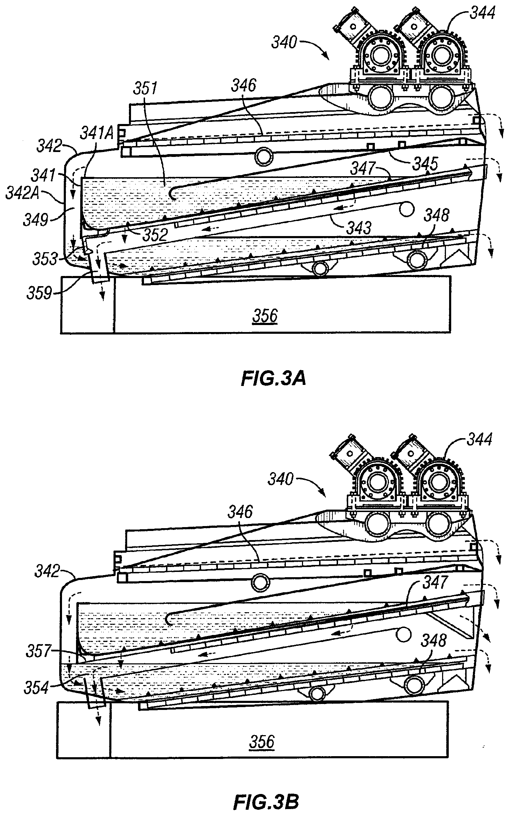

Figures 3A and 3B show a shale shaker 340, in accordance with the present invention, with a basket 342 vibrated by vibratory apparatus 344. Screens 346, 347, 348 are mounted in the basket with a flow-back barrier 345 beneath the screen 346 and flow-back barrier 343 beneath the screen 347.

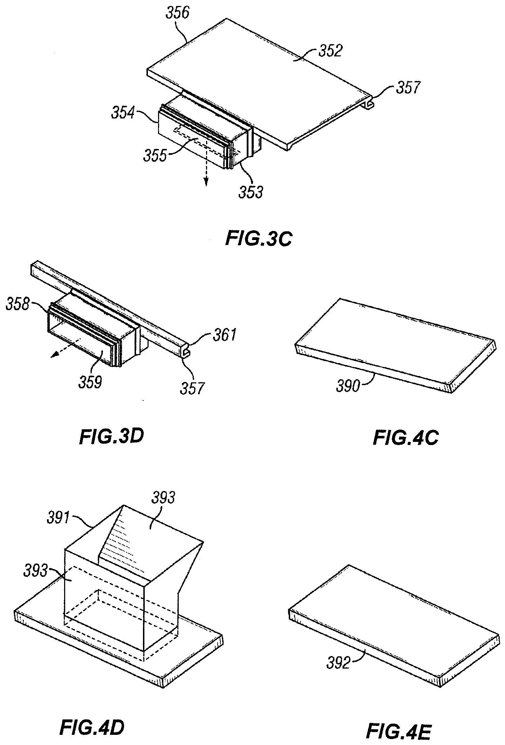

A weir 341 with a top end 341a defines (with an end 342a of the basket 342) a flow channel 349 for fluid flowing over the top 341a of the weir 341 from a pool 351 of fluid on the screen 347. Fluid flowing down in the channel 349 flows to the lowermost screen 348. Fluid flowing through the screen 348 flows into a sump 356. The screen 347 has flow barrier 352 (see Figure 3C) connected there-below with an end 353 which, in the position shown in Figure 3A, blocks an opening 354 so that fluid flowing in the channel 349 cannot flow into a channel 359. Also, with the opening 354 blocked, fluid flowing down through the screen 347 flows along the flow-back barrier 343 to the opening 354, into the channel 359, and then into the sump 356. Thus the flow mode for the screens 347 and 348 as shown in Figure 3A is parallel - fluid flowing through the screen 347 does not flow to the screen 348.

Fluid flowing through screen 346 and overflowing weir 341, flows through channel 349 on to screen 348. Fluid flows through the screen 348 into sump 356. Solids pass over screens 346, 347 and 348 for disposal or for further processing.

As shown in Figure 3B, the screen 347 does not have the flow below it and the channel 359 is closed to fluid flow by a flow barrier 357. With the channel 359 closed by the flow barrier 357 and with the end 353 removed from the opening 354, fluid flowing through the screen 347 flows onto the screen 348 and thus the flow mode, as shown in Figure 3B, is in series for the screens 347, 348.

As shown in Figure 3C, for parallel flow, the flow barrier 352 has a body 354 with a flow channel 355 there-through; a solid portion 356; and an end latch 357 for connection to the screen 347. As shown in Figure 3D the flow barrier 357 has a body 358 with a flow channel 359 there-through and a latch 361. Figure 3D illustrates the flow path for series flow.

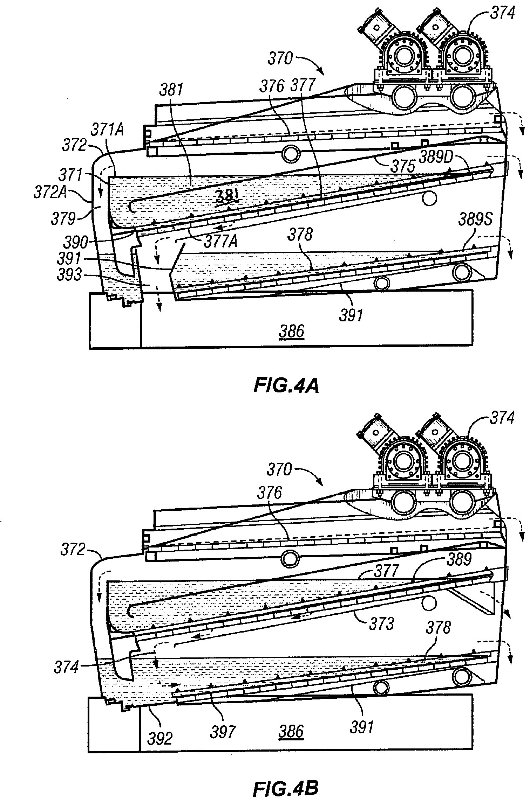

Figures 4A and 4B show a shale shaker 370 in accordance with the present invention with a basket 372 vibrated by vibratory apparatus 374. Screens 376, 377, 378 are mounted in the basket with a flow-back barrier 375 beneath the screen 376 and flow-back barrier 373 beneath the screen 377.

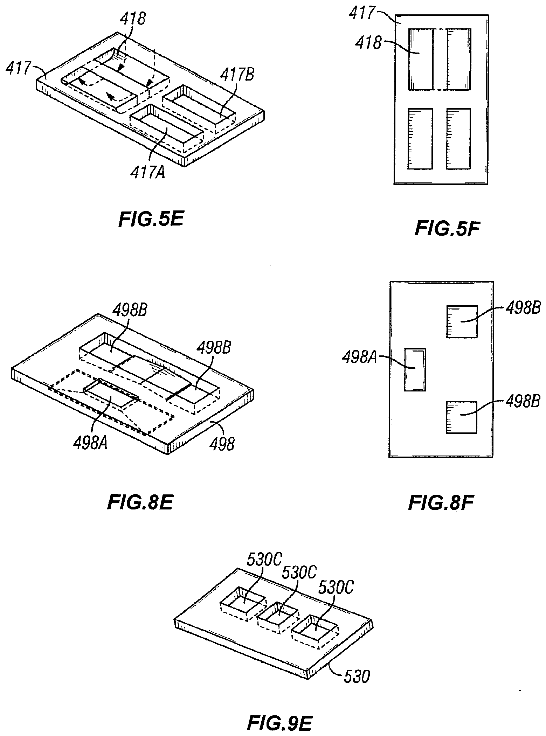

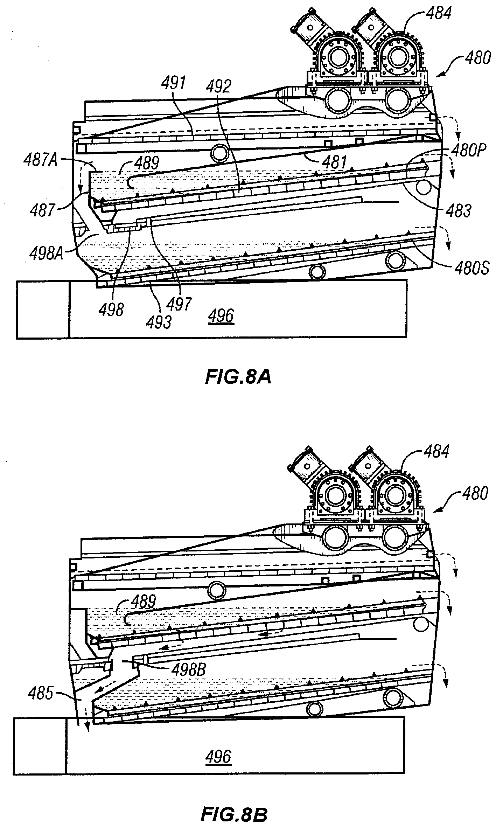

A weir 371 with a top end 371a defines (with an end 372a of the basket 372) a flow channel 379 for fluid flowing over the top 371a of the weir 371 from a pool 381 of fluid on the screen 377. Fluid flowing down (Figure 8A) in the channel 379, flows to the lowermost screen 378. Fluid flowing through the screen 378 flows along a flow-back barrier 391 into a sump 386.

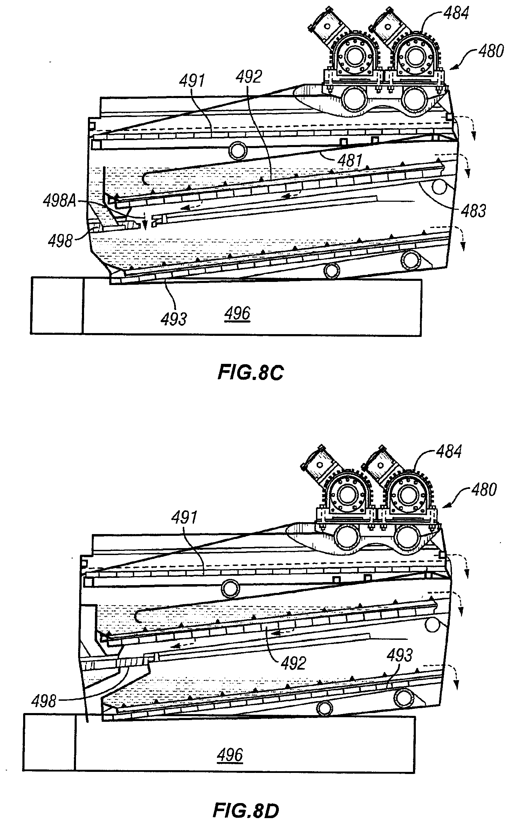

The screen 377 has an insert 390 at an end 377a which is in the position shown in Figure 4A. Fluid flowing through the screen 377 flows into a flow channel 393 of a channel apparatus 391 (see Figure 8D) and then into the sump 386. PNEUMOSEAL™ apparatus 389p, 389s facilitates the clamping in place of the screens and the maintenance of the screen in a desired position.

Fluid from the pool 381 flowing over the top 371a of the weir 371 flows in the channel 379 down to the screen 378. Fluid flowing through the screen 378 flows into the sump 386. Thus the flow from the screen 376 to and through the screens 377, 378 is in a 10 parallel flow mode.

As shown in Figure 4B, the insert 390 and the channel apparatus 391 have been removed. Fluid flowing through the screen 376 flows down to the screen 377. Then fluid flowing through the screen 377 flows down to the screen 378 through an opening 374. An insert 392, Figure 4E, blocks flow through an opening 397. Some fluid, with some small and/or floating solids therein may also pass over weir 371 through channel 379 and on to the lower screen 378.

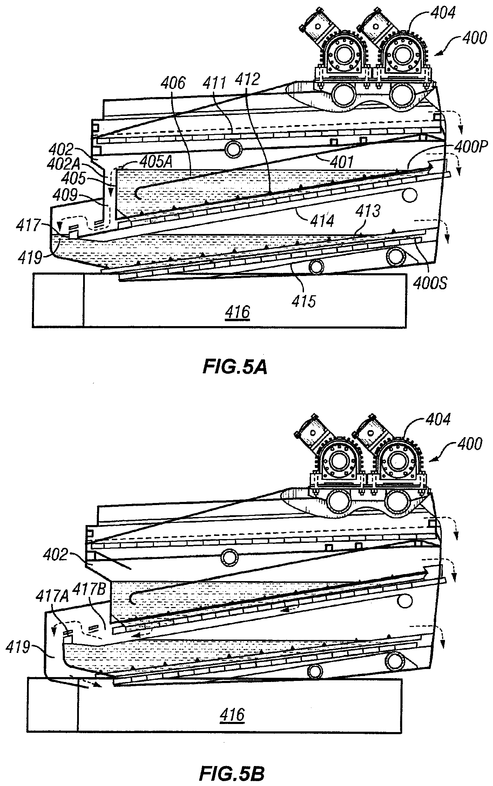

Figures 5A to 5D show a shaker 400 with a sump 416p and basket 402 vibrated by vibratory apparatus 404. Screens 411, 412, and 413 are mounted in the basket 402. A flow-back barrier 401 is below the screen 411, a flow-back barrier 414 is below the screen 412, and a flow-back barrier 415 is below the screen 413.

A weir 405 having a top end 405a with an end portion 402a of the basket 402 defines a channel 409 through which flows fluid coming over the top end 405a of the weir 405 from a pool 406 of fluid on the screen 412. Fluid flows down and out of the channel 409 to contact and flow through an insert 417 positioned at an end of the screen 412.

Fluid flows through a passageway 418 in the insert 417 (see Figures 5E to 5F) to a channel 419 and down to the screen 413. Thus fluid flows from the screen 411 to both the screens 412 and 413 in a parallel flow mode.

Fluid flowing through the screen 412 flows to and through channels 417a, 417b in the insert 417, from there into the channel 419, and down to the sump 416.

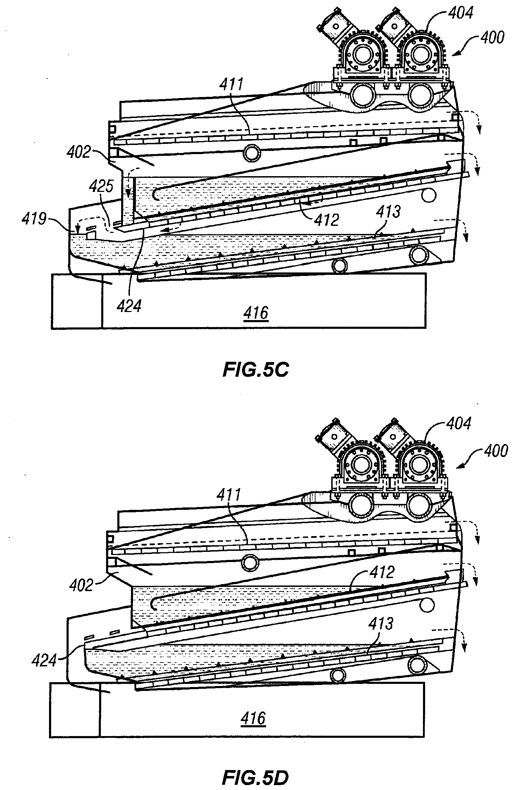

Figures 5C and 5D show the shaker 400 in a series flow mode. Flow is via the flow channels 417a, 417b of the insert 417 and then down, via the channel 419 onto the screen 413. PNEUMOSEAL™ apparatuses 400p, 400s hold screens in place (with no flow through the passageway 418) .

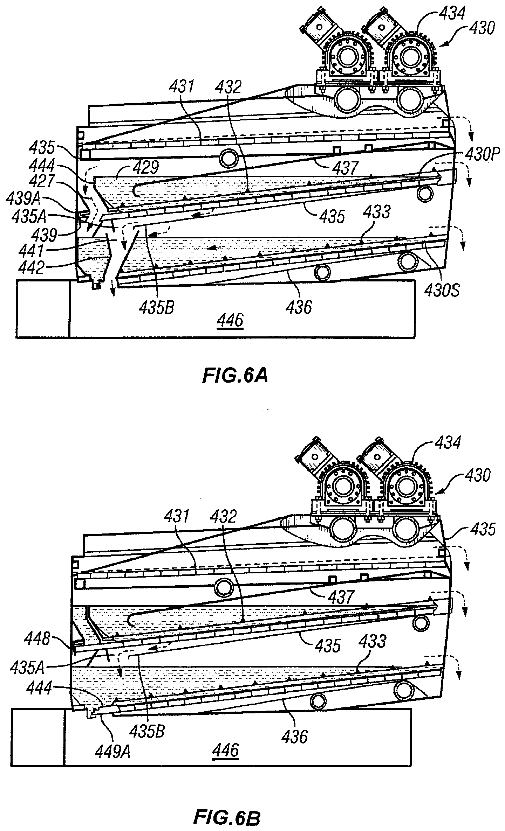

Figures 6A and 6B show a shale shaker 430, in parallel flow mode in Figure 6A and in series flow mode in Figure 6B. The shale shaker 430 has a basket 435 vibrated by a vibratory apparatus 434. A flow-back barrier 437 is below a screen 431; a flow-back
barrier 435 is below a screen 432; and a flow-back barrier 436 is below a screen 433.

The flow-back barrier 435 has a channel 435a in an end 435b. Pneumoseal apparatuses 430p, 430s hold screens in place.

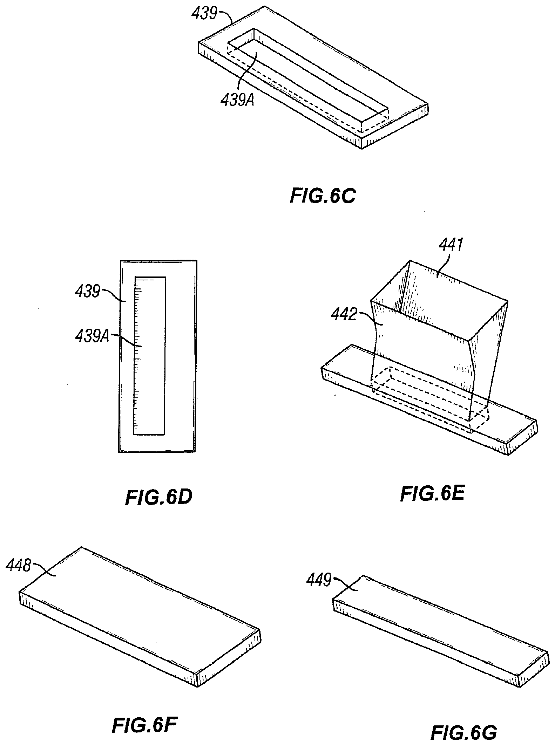

Fluid flowing through the screen 431 flows to both the screen 432 and to the screen 433 from a pool 429 on the screen 432, over a weir 444, through a channel 427, and through an opening 439a in an insert 439 (see Figures 6C, 6D) in a mount 439b. Fluid flowing through the screen 432 flows to a channel 441 of a channel apparatus 442 (see Figure 6E) and then to a sump 446. Fluid flowing through the screen 233 flows down to the sump 446.

As shown in Figure 6B, an insert 448 (see Figure 6F) blocks flow through the channel 427 and an insert 449 (see Figure 6G) block flow through an opening 449a so that all fluid flowing from the screen 431 flows to the screen 432. Via the opening 435a, all fluid flowing from the screen 432 flows to the screen 433.

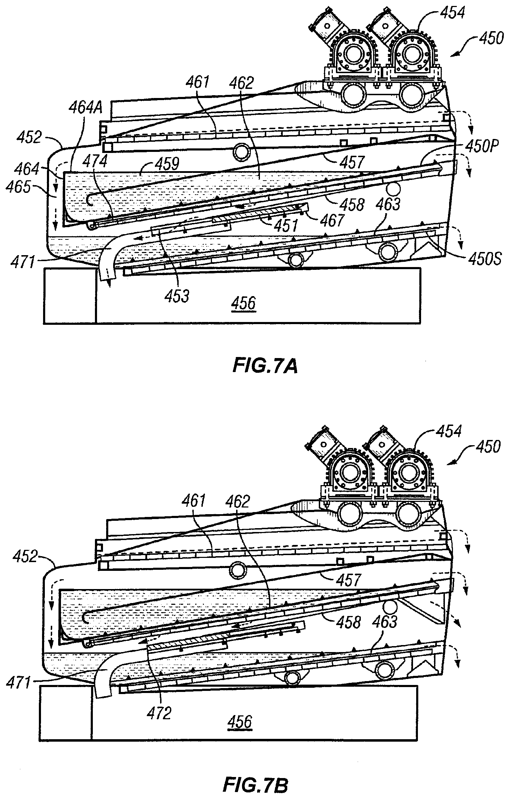

Figures 7A and 7B show a shale shaker 450 with a basket 452 vibrated by a vibratory apparatus 454. A flow-back barrier 457 is beneath a screen 461 and a flow-back barrier 488 is beneath a screen 462. Fluid flowing through a screen 463 flows into a sump 456. PNEUMOSEAL™ apparatuses 450p, 450s hold screens in place.

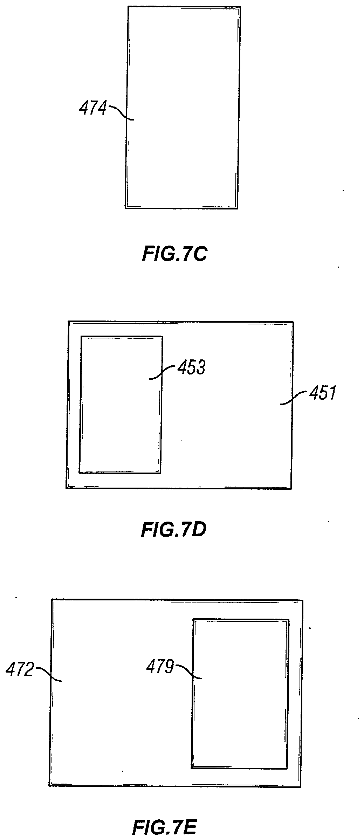

Fluid from a pool 459 on the screen 462 overflows a top end 464a of a weir 464, through a channel 465, onto the screen 463 (as shown in Figure 7A). Fluid flowing through the screen 462 flows through a channel 453 in an insert 451 (see Figure 7D) and then into the sump 456 (not onto the screen 463). The insert 451 is mounted in a mount 467 and the channel 453 is in fluid communication with a flow channel 471, permitting the fluid flowing through the screen 462 to flow into the channel 133. Thus, the fluid flowing through and then down from the screen 461 flows both to the screen 462 and (over the weir 464) to the screen 463, i.e. in a parallel flow mode. An insert 474 (see Figure 7C) at the end of the screen 462 holds the screen 462 in such a position that height of the pool 459 makes possible the flow of fluid over the weir 464, so that series or parallel flow can be achieved. It should be noted that drawing the diverter (insert) 451 back (towards the front, solids exit end of the shaker) to an open position for parallel mode operation and forward to a closed position for series mode operation. It should also be noted that in parallel operation, solids laden drilling fluid can still flow over weir 464, although only small solids and light solids are likely to be taken with the fluid over the weir 464.

Figure 7B illustrates a series flow mode for the shaker 450. An insert 472 blocks the opening to the channel 471 so that fluid flowing through the screen 462 flows down onto the screen 463 (not directly into the sump 456 through the channel 471). Some overflow, if any, from the pond on the screen 462 could flow over the weir 464 down to the screen 463. Optionally a cut-out portion of the insert 472 provides a handle (see Figure 7E) .

Figures 8A and 8B show the shale shaker 480 with a basket 482, vibrated by vibratory apparatus 484. Fluid flowing through a lowermost screen 493 flows into a sump 496.

A flow-back barrier 481 is beneath a top screen 491 and a flow-back barrier 483 is beneath a middle screen 492. A flow-back barrier 485 is beneath the screen 493. Pneumoseal apparatuses 480p, 480s hold screens in place. In a parallel flow mode as illustrated in Figures 12A, 12B, fluid flowing through the screen 491 flows to both the screen 492 and from a pool 489 on the screen 492 over a top end 487a of a weir 487 via a flow channel 488 down to the screen 493. It should be noted that the weir 487 is provided with a ledge 487a hanging over the pond 489, which helps inhibit solids flowing thereover, a majority of the inhibited solids will eventually sink and walk their way out of the pond 489 along screen 492 to a solids discharge end, indicated by the dashed arrow. An insert 498 (see Figures 12E, 12F) in a mount 497 has an opening 498a through which fluid from the channel 488 flows to the screen 493. At the same time, fluid from the screen 492 flows through openings 498b to a channel 485 and to the sump 496.

Figures 8C and 8D show the shale shaker 480 in series flow mode. As shown in Figure 8C, fluid has flowed through the screen 491 down to the screen 492. Fluid flowing through the screen 492 flows to an opening 498a in an insert 498 and then down to the screen 493. The insert 498(see Figures 12E, 12F) can block fluid flow through the 15 channel 485. The insert 498 has an opening 498a for fluid flow and openings 498b for fluid flow.

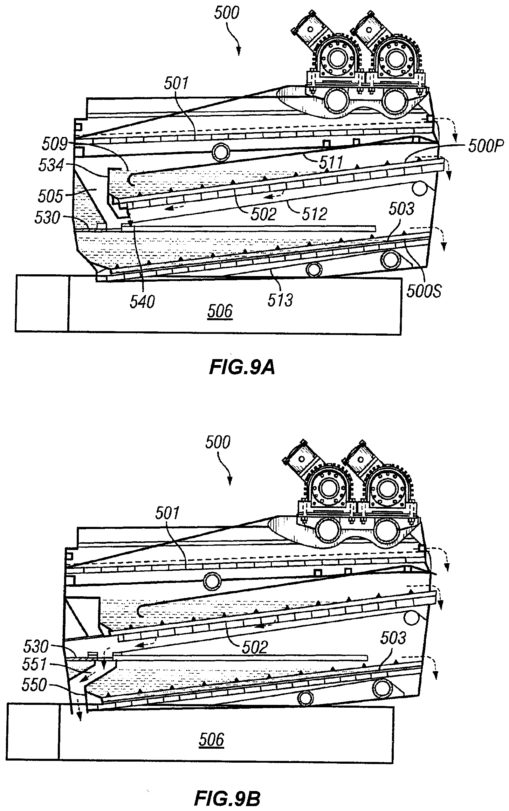

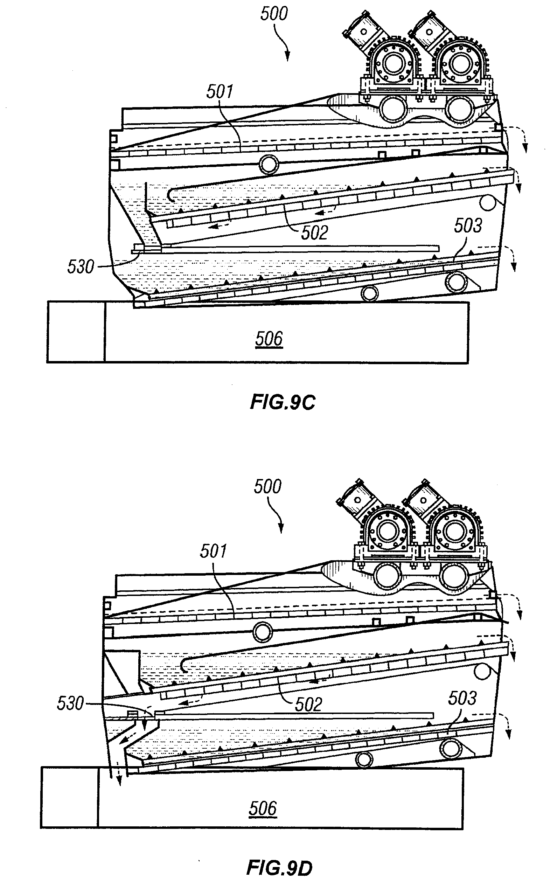

Figures 9A and 9B show a shale shaker 500 in a parallel flow mode. The shaker 500 has a basket 505 and screens 501 to 503 vibrated by a vibratory apparatus 504 Flow-back barriers 511 to 513 are, respectively, located under the screens 501 to 503. An insert 530 in a mount 540 is used to change operational mode from series to parallel and vice-versa. PNEUMOSEAL™ apparatuses 500p, 500s hold screens in place.
As shown in Figure 9A fluid from the screen 501 flows both to the screen 502 and to the screen 503 (from a pool 509 on the screen 502, over a weir 534, through a channel 505, through an opening 531 in the insert 530, to a channel 551 of a channel apparatus 550, and to a sump 506). Fluid from the screen 503 flows to the sump 506. Figures 9C and 9D illustrate the shaker 500 in a series flow mode. As shown in Figure 9C, the insert 530 (turned around) blocks fluid flow from the channel 515 so that the screen 502 receives the fluid flowing from the screen 501. The insert 530 also blocks fluid flow through the channel 551 so that all the fluid flowing from the screen 502 flows to the screen 503.

As shown in Figure 9E, the insert 530 has fluid flow channels 530c. Any screen assembly, any diverter, any pair of screen assemblies, and/or any insert in accordance with the present disclosure (including, without limitation those of Figures 2A to 9E) may be used with any shaker in accordance with the present invention disclosed herein.

The present disclosure, therefore, provides in at least certain embodiments, a system for processing a mixture of drilling fluid and solid material to separate at least one component of the mixture by size from the mixture, the system including: a vibratable basket for receiving an input flow of drilling fluid with solids therein; a plurality of spaced-apart screen assemblies including a first screen assembly and a second screen assembly positioned below the first screen assembly; the screen assemblies mounted in the vibratable basket and vibratable therewith; conversion apparatus associated with the screen assemblies for selectively controlling the input flow to select one of series flow and parallel flow to the screen assemblies; drilling fluid flowable through the first screen assembly; and drilling fluid flowable through the second screen assembly and flowable down therefrom. Such a system may one or some, in any possible combination, of the following: a system flow channel between the first screen assembly and the second screen assembly, the conversion apparatus including holding structure above the second screen assembly, a diverter held by the holding structure, the diverter having a diverter channel there-through through which fluid is flowable from the first screen assembly through the system flow channel down to the second screen assembly for series flow of the input flow from the first screen assembly to the second screen assembly, a weir adjacent the first screen assembly forming a barrier to facilitate maintenance of a pool of drilling fluid and solids on the first screen assembly, and the diverter having a blocking portion, the diverter movable to block flow through the system channel so that the pool rises and drilling fluid with solids bypasses the first screen assembly and flows to the second screen assembly for parallel flow of the input flow to both screen assemblies; the holding structure having spaced-apart rails and having an end opening, and the diverter located between the rails and having handle apparatus at the end opening, the handle apparatus accessible for moving the diverter with respect to the system flow channel; flow-back apparatus beneath the first screen assembly for directing flow passing through the first screen assembly to the system flow channel; a sump beneath the second screen assembly for receiving flow passing through the screen assemblies; a parallel flow channel adjacent the screen assemblies for directing flow from the pool to the second screen assembly bypassing the first screen assembly during parallel flow of the system; holding structure above the second screen assembly, and clamping apparatus for holding the diverter in the holding structure; wherein the first screen assembly includes a scalping screen; wherein the second screen assembly includes a screen with second screen mesh of a size suitable for removing solids the size of lost circulation material; a system flow channel between the first screen assembly and the second screen assembly through which fluid is flowable from the first screen assembly to the second screen assembly, the conversion apparatus having a body, the body having a blocking portion for blocking flow to the system flow channel to effect system parallel flow of the input flow to both screen assemblies, and the body having a flow duct for receiving flow from the first screen assembly which is flowable through the duct to the second screen assembly for system series flow to the screen assemblies; a duct blocker for blocking flow through the duct; and/or the conversion apparatus having a body, a first flow channel through the body for effecting system parallel flow to the screen assemblies, and a second flow channel through the body for effecting system series flow to the screen assemblies.

The present disclosure, therefore, provides in at least certain embodiments, a system for processing a mixture of drilling fluid and solid material to separate at least one component of the mixture by size from the mixture, the system including: a vibratable basket for receiving an input flow of drilling fluid with solids therein; a plurality of spaced-apart screen assemblies including a first screen assembly and a second screen assembly positioned below the first screen assembly; the screen assemblies mounted in the vibratable basket and vibratable therewith; conversion apparatus associated with the screen assemblies for selectively controlling the input flow to select one of series flow and parallel flow to the screen assemblies; drilling fluid flowable through the first screen assembly and drilling fluid flowable through the second screen assembly and down therefrom; a system flow channel between the first screen assembly and the second screen assembly; the conversion apparatus having a body, a first flow channel through the body for effecting system parallel flow to the screen assemblies, a second flow channel through the body for effecting system series flow to the screen assemblies; flow-back apparatus beneath the first screen assembly for directing flow passing through the first screen assembly to the system flow channel; a sump beneath the second screen assembly for receiving flow passing through the screen assemblies; and a parallel flow channel adjacent the screen assemblies for directing flow from the pool to the second screen assembly bypassing the first screen assembly during parallel flow to the screen assemblies

The present disclosure, therefore, provides in at least certain embodiments, a conversion apparatus for a system for processing a mixture of drilling fluid and solid material to separate at least one component of the mixture from the mixture, the system including a vibratable basket for receiving an input flow of drilling fluid with solids therein, a plurality of spaced-apart screen assemblies including a first screen assembly and a second screen assembly positioned below the first screen assembly, the screen assemblies mounted in the vibratable basket and vibratable therewith, drilling fluid flowable through the first screen assembly and the second screen assembly down therefrom, the conversion apparatus associated with the screen assemblies for selectively controlling the input flow to select one of series flow and parallel flow, the conversion apparatus including: a body, a first flow channel through the body for effecting system parallel flow to the screen assemblies, and a second flow channel through the body for effecting system series flow to the screen assemblies.

The present disclosure, therefore, provides in at least certain embodiments, a method for treating a flow of drilling fluid with solids, the method including: introducing the flow of drilling fluid with solids to a system for separating at least one component from the flow, the system as any disclosed herein in accordance with the present disclosure; the method further including:
selecting one of a system series flow to screen assemblies of the system or a system parallel flow to the screen assemblies using a conversion apparatus; flowing drilling fluid with solids to the screen assemblies; and screening the flow to each screening assembly. Such a method may one or some, in any possible combination, of the following: wherein the conversion apparatus has a body, a first flow channel through the body for effecting system parallel flow to the screen assemblies, and a second flow channel through the body for effecting system series flow to the screen assemblies, the method further including selecting the first flow channel for system parallel flow or selecting the second flow channel for system series flow; wherein the system further has flow-back apparatus beneath the first screen assembly for directing flow passing through the first screen assembly to the system flow channel, the method further including directing flow from the first screen assembly to the system flow channel; wherein the system further has a sump beneath the second screen assembly, the sump receiving flow passing through the screen assemblies; wherein the system further has holding structure above the second screen assembly, and clamping apparatus for holding the diverter in the holding structure, the method further including clamping the diverter with the clamping apparatus; and/or wherein the first screen assembly includes a scalping screen, and wherein the second screen assembly includes a screen with second screen mesh of a second size suitable for removing solids the size of lost circulation material.

This Application is a continuation-in-part of 12/490,492 filed on June 24th, 2009, and published as US-A1-2010/0089652, entitled "Shale Shaker flow Diverter", which is a continuation-in-part of U.S. Application Ser. No. 12/287,709 filed on Oct. 10, 2008, and published as US-A1-2010/0089802, entitled "Systems and Methods For the Recovery of Lost Circulation and Similar Material".

## Claims

1. An apparatus for separating solids from solids laden drilling fluid and sizing the solids, the apparatus comprising a basket (312), a vibratory mechanism (314), a first screen deck (318b) and a second screen deck (318c) mounted below said first screen deck and a directing device for selecting a parallel or series mode of operation, wherein in a parallel mode of operation flow of solids laden drilling fluid is divided between the first deck and the second deck, and wherein in a series mode of operation in which solids laden drilling fluid is directed on to the first screen deck and then drilling fluid screened thereby is directed on to said second screen deck, wherein the apparatus further comprises a moveable diverter tray for selecting parallel or series mode of operation, **characterized in that** said moveable diverter tray (320) is slideably arranged in rails (320a) having an expandable element (320p,320s) to selectively fix said moveable diverter tray (320) in said rails (320a) wherein said diverter tray comprises a handle (320b) accessible at a discharge end of said basket (312) .

2. An apparatus as claimed in Claim 1, further comprising a scalping screen deck.

3. An apparatus as claimed in Claim 2, further comprising a flow tray for directing scalped solids laden drilling fluid on to a feed end of said first screen deck.

4. An apparatus as claimed in any one of Claims 1 to 3, wherein said rails comprises C-channels.

5. An apparatus as claimed in any one of Claims 1 to 4, wherein said diverter tray (320) has a duct (326) therebelow for directing screened solids laden drilling fluid on to the second screen deck, such that when the diverter tray is retracted, screened solids laden drilling fluid flows through said duct (326) on to said second screen deck (318c).

6. An apparatus as claimed in any one of Claims 1 to 5, wherein said diverter tray (320) has a duct (471) therebelow for directing screened solids laden drilling fluid into a sump (456), such that when the diverter tray (320) is retracted, screened solids laden drilling fluid flows through said duct (326) into said sump (456).

7. An apparatus as claimed in any one of claims 1 to 6, wherein said first and second screen decks (318b,318c) comprise screens having the same screen mesh size.

8. An apparatus as claimed in any one of Claims 1 to 7, wherein said first and second screen decks (318b,318c) comprise screens having the different screen mesh size.

9. An apparatus as claimed in any one of Claims 1 to 8, wherein said the diverter tray (320) has a solid chute portion (320a) for facilitating fluid flow.

10. A method for separating solids from solids laden drilling fluid and selectively sizing the solids, the apparatus comprising a basket (312), a vibratory mechanism (314), a first screen deck (318b) and a second screen deck (318c) mounted below said first screen deck and a directing device for selecting a parallel or series mode of operation, wherein in a parallel mode of operation flow of solids laden drilling fluid is divided between the first deck and the second deck, and wherein in a series mode of operation solids laden drilling fluid is directed on to the first screen deck and then drilling fluid screened thereby is directed on to said second screen deck wherein the directing device comprises a diverter tray (390,439), the method being **characterized by** further comprising the step of sliding said diverter tray (390,439) arranged in rails (320a) having an expandable element (320p,320s) therein to selectively fix said diverter tray (320) in said rails (320a) in at least one of a first position for parallel mode of operation and a second position for series mode of operation wherein the diverter tray (390,439) comprises a handle (320b) accessible from an end opening of said basket (312), the method comprising the step of pulling on the handle (320b) to move said diverter tray (320).

## Patentansprüche

1. Vorrichtung zum Abscheiden von Feststoffen aus feststoffhaltigem Spülschlamm und Klassieren der Feststoffe, wobei die Vorrichtung einen Korb (312), einen Vibrationsmechanismus (314), eine erste Siebfläche (318b) und eine zweite Siebfläche (318c), die unterhalb der ersten Siebfläche angebracht ist, und eine Leiteinrichtung zum Auswählen eines parallelen oder seriellen Betriebsmodus umfasst,
wobei in einem parallelen Betriebsmodus ein Strom von feststoffhaltigem Spülschlamm zwischen der ersten Fläche und der zweiten Fläche geteilt wird,
und wobei in einem seriellen Betriebsmodus in dem feststoffhaltiger Spülschlamm auf die erste Siebfläche geleitet wird und danach durch dieselbe gesiebter Spülschlamm auf die zweite Siebfläche geleitet wird, wobei die Vorrichtung ferner einen beweglichen Umleitboden zum Auswählen des parallelen oder des seriellen Betriebsmodus umfasst,
**dadurch gekennzeichnet, dass** der bewegliche Umleitboden (320) verschiebbar in Schienen (320a) angeordnet ist, die ein ausfahrbares Element (320p, 320s) aufweisen, um den beweglichen Umleitboden (320) selektiv in den Schienen (320a) zu fixieren, wobei der Umleitboden einen Handgriff (320b) umfasst, der an einem Ausgabeende des Korbes (312) zugänglich ist.

2. Vorrichtung nach Anspruch 1, die ferner eine Grobsiebfläche umfasst.

3. Vorrichtung nach Anspruch 2, die ferner einen Strömungsboden zum Leiten von grobgesiebtem feststoffhaltigem Spülschlamm auf ein Speiseende der ersten Siebfläche umfasst.

4. Vorrichtung nach einem der Ansprüche 1 bis 3, wobei die Schienen U-Profile umfassen.

5. Vorrichtung nach einem der Ansprüche 1 bis 4, wobei der Umleitboden (320) einen Kanal (326) unterhalb desselben zum Leiten von gesiebtem feststoffhaltigem Spülschlamm auf die zweite Siebfläche aufweist, so dass, wenn der Umleitboden zurückgezogen ist, gesiebter feststoffhaltiger Spülschlamm durch den Kanal (326) auf die zweite Siebfläche (318c) strömt.

6. Vorrichtung nach einem der Ansprüche 1 bis 5, wobei der Umleitboden (320) einen Kanal (471) unterhalb desselben zum Leiten von gesiebtem feststoffhaltigem Spülschlamm in einen Sumpf (456) aufweist, so dass, wenn der Umleitboden (320) zurückgezogen ist, gesiebter feststoffhaltiger Spülschlamm durch den Kanal (326) in den Sumpf (456) strömt.

7. Vorrichtung nach einem der Ansprüche 1 bis 6, wobei die erste und die zweite Siebfläche (318b, 318c) Siebe umfassen, welche die gleiche Siebmaschengröße aufweisen.

8. Vorrichtung nach einem der Ansprüche 1 bis 7, wobei die erste und die zweite Siebfläche (318b, 318c) Siebe umfassen, welche eine unterschiedliche Siebmaschengröße aufweisen.

9. Vorrichtung nach einem der Ansprüche 1 bis 8, wobei der Umleitboden (320) einen Feststoffrutschenabschnitt (320a) zum Erleichtern des Fluidstroms aufweist.

10. Verfahren zum Abscheiden von Feststoffen aus feststoffhaltigem Spülschlamm und Klassieren der Feststoffe, wobei die Vorrichtung einen Korb (312), einen Vibrationsmechanismus (314), eine erste Siebfläche (318b) und eine zweite Siebfläche (318c), die unterhalb der ersten Siebfläche angebracht ist, und eine Leiteinrichtung zum Auswählen eines parallelen oder seriellen Betriebsmodus umfasst,
wobei in einem parallelen Betriebsmodus ein Strom von feststoffhaltigem Spülschlamm zwischen der ersten Fläche und der zweiten Fläche geteilt wird,
und wobei in einem seriellen Betriebsmodus feststoffhaltiger Spülschlamm auf die erste Siebfläche geleitet wird und danach durch dieselbe gesiebter Spülschlamm auf die zweite Siebfläche geleitet wird, wobei die Leiteinrichtung ferner einen Umleitboden (390, 439) umfasst,
wobei das Verfahren **dadurch gekennzeichnet, dass** es ferner den Schritt des Verschiebens des Umleitbodens (390, 439), der in Schienen (320a) angeordnet ist, die ein ausfahrbares Element (320p, 320s) in denselben aufweisen, um den Umleitboden (320) selektiv in den Schienen (320a) zu fixieren, in wenigstens einer von einer ersten Stellung für einen parallelen Betriebsmodus und einer zweiten Stellung für einen seriellen Betriebsmodus, wobei der Umleitboden (390, 439) einen Handgriff (320b) umfasst, der von einer Endöffnung des Korbes (312) zugänglich ist, wobei das Verfahren den Schritt des Ziehens an dem Handgriff (320b) umfasst, um den Umleitboden (320) zu bewegen.

## Revendications

1. Appareil destiné à séparer des solides d'un fluide de forage chargé de solides et à calibrer les solides, l'appareil comprenant un panier (312), un mécanisme vibratoire (314), une première surface criblante (318b) et une deuxième surface criblante (318c) montée au-dessous de ladite première surface criblante, et un dispositif de direction pour sélectionner un mode de fonctionnement en parallèle ou en série,
dans lequel, dans un mode de fonctionnement en parallèle, l'écoulement du fluide de forage chargé de solides est divisé entre la première surface et la deuxième surface,
et dans lequel, dans un mode de fonctionnement en série, dans lequel le fluide de forage chargé de solides est dirigé sur la première surface criblante, le fluide de forage ayant été criblé par celle-ci étant ensuite dirigé vers ladite deuxième surface criblante, l'appareil comprenant en outre un plateau de dérivation mobile pour sélectionner le mode de fonctionnement en parallèle ou en série,
**caractérisé en ce que** ledit plateau de dérivation mobile (320) est agencé de manière coulissante dans des rails (320a) comportant un élément extensible (320p, 320s) pour fixer sélectivement ledit plateau de dérivation mobile (320) dans lesdits rails (320a), ledit plateau de dérivation comprenant une poignée (320b) accessible au niveau d'une extrémité de décharge dudit panier (312).

2. Appareil selon la revendication 1, comprenant en outre une surface criblante de scalpage.

3. Appareil selon la revendication 2, comprenant en outre un plateau d'écoulement pour diriger le fluide de forage chargé de solides scalpé vers une extrémité d'alimentation de ladite première surface criblante.

4. Appareil selon l'une quelconque des revendications 1 à 3, dans lequel lesdits rails comprennent des canaux en C.

5. Appareil selon l'une quelconque des revendications 1 à 4, dans lequel ledit plateau de dérivation (320) comporte un conduit (326) agencé au-dessous de celui-ci pour diriger le fluide de forage chargé de solides criblé vers la deuxième surface criblante, de sorte que lorsque le plateau de dérivation est rétracté, le fluide de forage chargé de solides criblé s'écoule à travers ledit conduit (326) sur ladite deuxième surface criblante (318c).

6. Appareil selon l'une quelconque des revendications 1 à 5, dans lequel ledit plateau de dérivation (320) comporte un conduit (471) agencé au-dessous de celui-ci, pour diriger le fluide de forage chargé de solides criblé dans un puisard (456), de sorte que lorsque le plateau de dérivation (320) est rétracté, le fluide de forage chargé de solides criblé s'écoule à travers ledit conduit (326) dans ledit puisard (456).

7. Appareil selon l'une quelconque des revendications 1 à 6, dans lequel lesdites première et deuxième surfaces criblantes (318b, 318c) comprennent des cribles ayant des calibres de criblage identiques.

8. Appareil selon l'une quelconque des revendications 1 à 7, dans lequel lesdites première et deuxième surfaces criblantes (318b, 318c) comprennent des cribles ayant des calibres de criblage différents.

9. Appareil selon l'une quelconque des revendications 1 à 8, dans lequel ledit plateau de dérivation (320) comporte une partie de goulotte de déversement de solides (320a) pour faciliter l'écoulement du fluide.

10. Procédé de séparation de solides d'un fluide de forage chargé de solides et de calibrage sélectif des solides, l'appareil comprenant un panier (312), un mécanisme vibratoire (314), une première surface criblante (318b) et une deuxième surface criblante (318c) montée au-dessous de ladite première surface criblante, et un dispositif de direction pour sélectionner un mode de fonctionnement en parallèle ou en série,
dans lequel, dans un mode de fonctionnement en parallèle, l'écoulement du fluide de forage chargé de solides est divisé entre la première surface et la deuxième surface,
et dans lequel, dans un mode de fonctionnement en série, le fluide de forage chargé de solides est dirigé sur la première surface criblante, le fluide de forage criblé par celle-ci étant ensuite dirigé sur ladite deuxième surface criblante, dans lequel le dispositif de direction comprend un plateau de dérivation (390, 439),
le procédé étant **caractérisé en ce qu'**il comprend en outre l'étape de coulissement dudit plateau de dérivation (390, 439) agencé dans des rails (320a) comportant un élément extensible (320p, 320s), pour fixer sélectivement ledit plateau de dérivation (320) dans lesdits rails (320) dans au moins une parmi une première position pour un mode de fonctionnement en parallèle, et une deuxième position pour un mode de fonctionnement en série, dans lequel le plateau de dérivation (390, 439) comprend une poignée (320b) accessible à partir d'une ouverture d'extrémité dudit panier (312), le procédé comprenant l'étape d'exécution d'une traction sur ladite poignée (320b) pour déplacer ledit plateau de dérivation (320).
